# EUROPEAN PATENT SPECIFICATION

(11) **EP 1 882 847 B1**
(45) Date of publication and mention of the grant of the patent: **02.03.2011**
(21) Application number: 06756414.6
(22) Date of filing: 22.05.2006
(51) Int. Cl.: F02M 69/32, F16K 3/26, F16K 11/07

(54) **AIR INTAKE DEVICE FOR MULTI-CYLINDER ENGINE**
LUFTEINLASSVORRICHTUNG FÜR MEHRZYLINDERMOTOR
DISPOSITIF D ADMISSION D AIR POUR MOTEUR MULTI-CYLINDRE

(30) Priority: 20.05.2005 JP 2005147704
(43) Date of publication of application: 30.01.2008
(73) Proprietor: Keihin Corporation, Tokyo 163-0539 (JP)
(72) Inventor: MITOBE, Masaaki c/o Kakuda Development Center of, Kakuda-shi, Miyagi 9811505 (JP); MARUYAMA, Takefumi, c/o Kakuda Development Center of, Kakudashi, Miyagi 9811505 (JP)
(74) Representative: Prechtel, Jörg
(86) International application number: PCT/JP2006/310108
(87) International publication number: WO 2006/123818

(56) References cited:
- EP-A- 0 206 018
- EP-A- 1 296 049
- EP-A- 1 422 419
- WO-A1-01/98644
- JP-A- 2002 349 396
- JP-A- 2003 343 398
- JP-A- 2003 343 398

## Description

### TECHNICAL FIELD

The present invention relates to an improvement of a multicylinder engine intake system that includes a plurality of intake paths communicating with intake ports of a multicylinder engine, a plurality of throttle valves for opening and closing these intake paths, a common bypass upstream passage having an upstream end thereof opening to the atmosphere, a plurality of bypass downstream passages having downstream ends thereof opening into the intake paths downstream of the corresponding throttle valves, and a bypass control valve for providing communication between a downstream end of the bypass upstream passage and upstream ends of the plurality of bypass downstream passages and controlling the degree of communication.

### BACKGROUND ART

Such a multicylinder engine intake system is already known, as disclosed in Patent Publication 1, and its bypass control valve is used mainly for adjusting the amount of fast idle air supplied to an engine through a bypass in order to appropriately control a fast idle rotational speed of the engine while it is warming up.
Patent Publication 1: Japanese Patent Application Laid-open No. 2002-89415

Japanese Patent Application Laid-open No. 2003-343398 shows another prior art intake control device with an air distributor and a control valve element that is slidably arranged in a slide valve chamber.

Document EP 1 422 419 A1 a bypass intake volume control device with a slidable bypass valve. The cylindrical bypass valve comprises a groove and a key to prevent rotation of the valve.

### DISCLOSURE OF INVENTION

### PROBLEMS TO BE SOLVED BY THE INVENTION

The multicylinder engine intake system disclosed in Patent Publication 1 above is arranged so that the bypass control valve is formed from a cylindrical valve chamber and a piston-shaped valve body slidably fitted into the valve chamber; a bypass upstream passage has its downstream end opening on one end face of the valve chamber, a plurality of bypass downstream passages have their upstream ends opening on a side face of the valve chamber so as to face each other along a plane containing an axis of the valve chamber, and the degree of communication between the bypass upstream passage and the bypass downstream passages is controlled by opening and closing the upstream ends of these bypass downstream passages by means of sliding of the valve body.

In this arrangement in which the upstream ends of the plurality of bypass downstream passages, which open on the side face of the valve chamber, are positioned so as to face each other along the plane containing the axis of the valve chamber, when the intake negative pressure of the engine acts alternately on the plurality of bypass downstream passages while the engine is running, the valve body vibrates in the lateral direction by being drawn in turn toward one side and the other side of an inner peripheral face of the valve chamber, and there is a possibility that control of the degree of opening of the bypass downstream passages by the valve body might become unstable.

The present invention has been accomplished in the light of such circumstances, and it is an object thereof to provide a multicylinder engine intake system of the above type that suppresses lateral vibration of the valve body due to the intake negative pressure of the multicylinder engine, stabilizes control of the degree of opening of the bypass downstream passage by the valve body, in particular enables the amount of fast idle air supplied to each cylinder of the engine to be made uniform, and contributes to cleaning of exhaust gas.

### MEANS FOR SOLVING THE PROBLEMS

In order to attain the above object, according to the present invention, there is provided a multicylinder engine intake system according to claim 1.

### EFFECTS OF THE INVENTION

In accordance with the present invention, during fast idling when the valve body of the bypass control valve adjusts the degree of opening of the bypass downstream passage into the valve chamber, even if the engine intake negative pressure acts alternately on side faces of the valve body through the plurality of bypass downstream passages, the valve body is drawn by the above negative pressure toward a middle section between the openings of the plurality of bypass downstream passages into the valve chamber, which are in proximity to each other, vibration is thus suppressed, and as a result there is hardly any change in the gap between the valve body and the inner face of the valve chamber on the opening side, thereby making it possible to enhance the precision of control of the degree of opening of the bypass downstream passage by the valve body, make the amount of fast idle air supplied to each engine cylinder uniform, stabilize the fast idle rotational speed, and reduce harmful components in the exhaust gas. Furthermore, even if the valve body is drawn by the engine intake negative pressure toward a middle section between the openings of the plurality of bypass downstream passages into the valve chamber, which are in proximity to each other, an undue side pressure does not act on the rotation-preventing means, the rotation-preventing means therefore does not interfere with sliding of the valve body, and it is thus possible to ensure that the valve body moves smoothly.

(deleted)

### BRIEF DESCRIPTION OF DRAWINGS

[FIG. 1] FIG. 1 is a front view of a multicylinder engine intake system related to the present invention (first embodiment).
[FIG. 2] FIG. 2 is a plan view from arrow 2 in FIG. 1 (first embodiment).
[FIG. 3] FIG. 3 is an enlarged view of part 3 in FIG. 1 (first embodiment).
[FIG. 4] FIG. 4 is a sectional view along line 4-4 in FIG. 3 (first embodiment).
[FIG. 5] FIG. 5 is a sectional view along line 5-5 in FIG. 3 (first embodiment).
[FIG. 6] FIG. 6 is a sectional view along line 6-6 in FIG. 4 (first embodiment).
[FIG. 7] FIG. 7 is a sectional view along line 7-7 in FIG. 4 (first embodiment).
[FIG. 8] FIG. 8 is a sectional view along line 8-8 in FIG. 6 (first embodiment).
[FIG. 9] FIG. 9 is a schematic diagram of air passages of the intake system (first embodiment).

### EXPLANATION OF REFERENCE NUMERALS AND SYMBOLS

- D: Multicylinder engine intake system
- 1: Throttle body
- 2₁, 2₂: Intake path
- 5₁, 5₂: Throttle valve
- 10: Bypass control valve
- 12₁, 12₂: Bypass
- 12a: Bypass upstream passage
- 12b₁, 12b₂: Bypass downstream passage
- 18: Valve chamber
- 25: Actuator
- 26: Valve body
- 27, 28: Rotation-preventing means (keyway, key)

### BEST MODE FOR CARRYING OUT THE INVENTION

A mode for carrying out the present invention is explained below by reference to a preferred embodiment of the present invention shown in the attached drawings.

### [Embodiment 1]

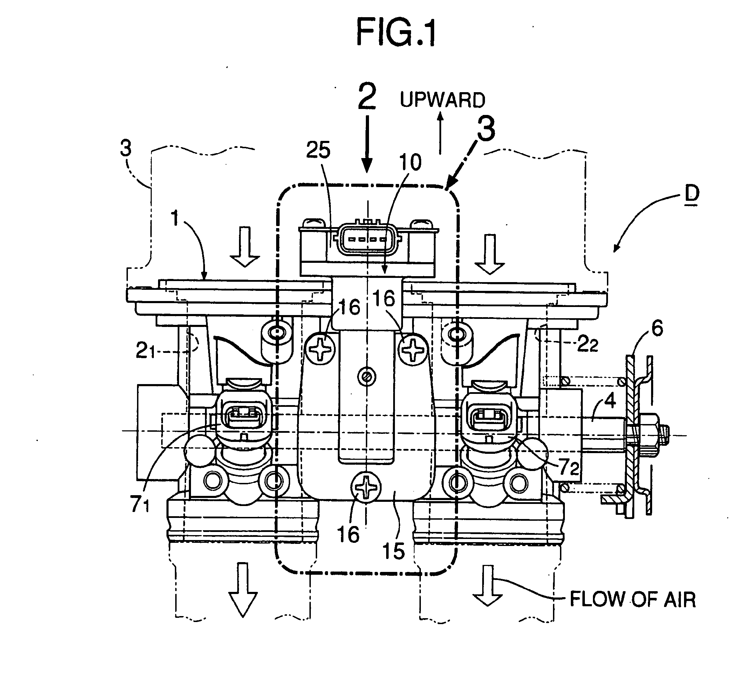

In FIG. 1, FIG. 2, and FIG. 9, reference symbol D denotes a twin cylinder engine intake system, which is equipped with a parallely-arranged throttle body 1; this throttle body 1 is of a downdraft type and is provided with a pair of intake paths 2₁ and 2₂, which are parallel to each other and have the downstream side facing downward toward an engine (not illustrated), and this throttle body 1 has an air cleaner 3 mounted on an upper end part, the upstream end of each of the intake paths 2₁ and 2₂ opening within the air cleaner 3.

The throttle body 1 rotatably supports a valve shaft 4 that crosses the intake paths 2₁ and 2₂, and throttle valves 5₁ and 5₂ for opening and closing the intake paths 2₁ and 2₂ respectively are mounted on the valve shaft 4. The valve shaft 4 has a throttle drum 6 mounted at one end for driving the opening and closing. The throttle body 1 is equipped with fuel injection valves 7₁ and 7₂, which inject fuel into engine intake ports via the intake paths 2₁ and 2₂ downstream of the throttle valves 5₁ and 5₂.

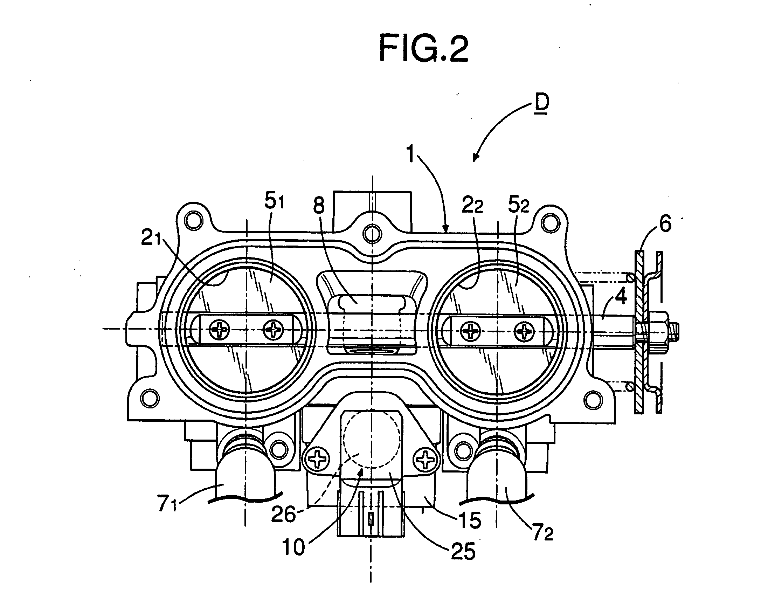

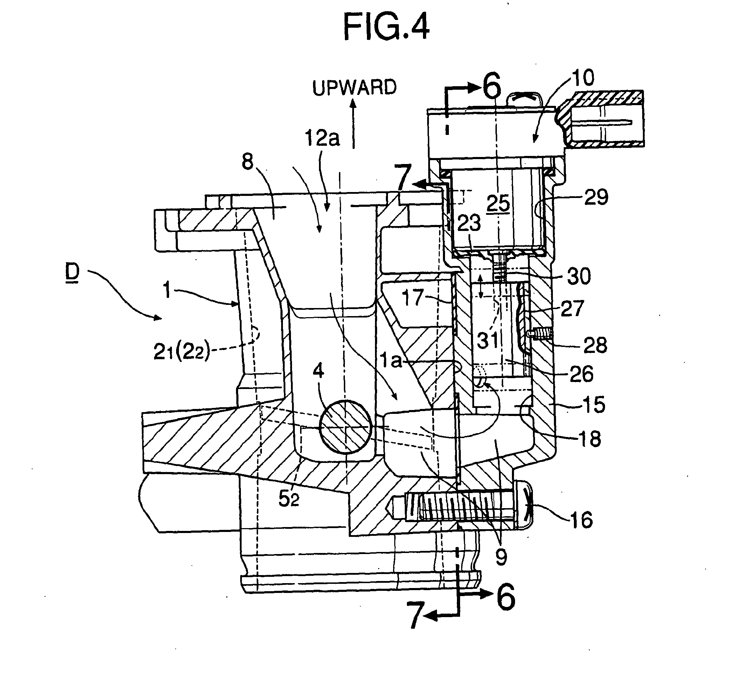

As shown in FIG. 2 to FIG. 4, formed in the throttle body 1 are one air inlet chamber 8 and a guide passage 9 extending from the air inlet chamber 8, the air inlet chamber 8 being formed between the pair of intake paths 2₁ and 2₂ and opening on an upper end face of the throttle body 1 on the air cleaner 3 side, and a bypass control valve 10 being connected to the guide passage 9. The air inlet chamber 8 and the guide passage 9 form a bypass upstream passage 12a.

A pair of bypass downstream passages 12b₁ and 12b₂ extend from the bypass control valve 10, and these bypass downstream passage 12b₁ and 12b₂ have their downstream ends opening into the intake paths 2₁ and 2₂ of the throttle body 1 downstream of the respective throttle valves 5₁ and 5₂.

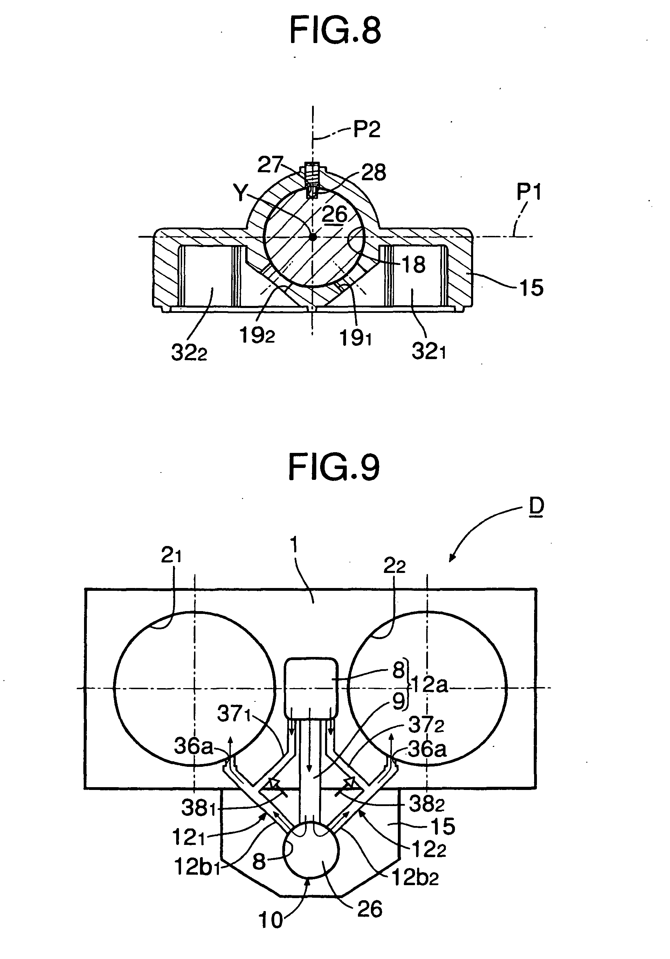

As clearly shown in FIG. 9, the bypass upstream passage 12a and the bypass downstream passages 12b₁ and 12b₂ form bypasses 12₁ and 12₂ connected to the intake paths 2₁ and 2₂ while bypassing the throttle valves 5₁ and 5₂ respectively, and the bypass upstream passage 12a is a single passage shared by the two bypasses 12₁ and 12₂. The bypass control valve 10 has the functions of distributing secondary air introduced into the single bypass upstream passage 12a between the intake paths 2₁ and 2₂ via the bypass downstream passages 12b₁ and 12b₂ and at the same time controlling the amount of air distributed.

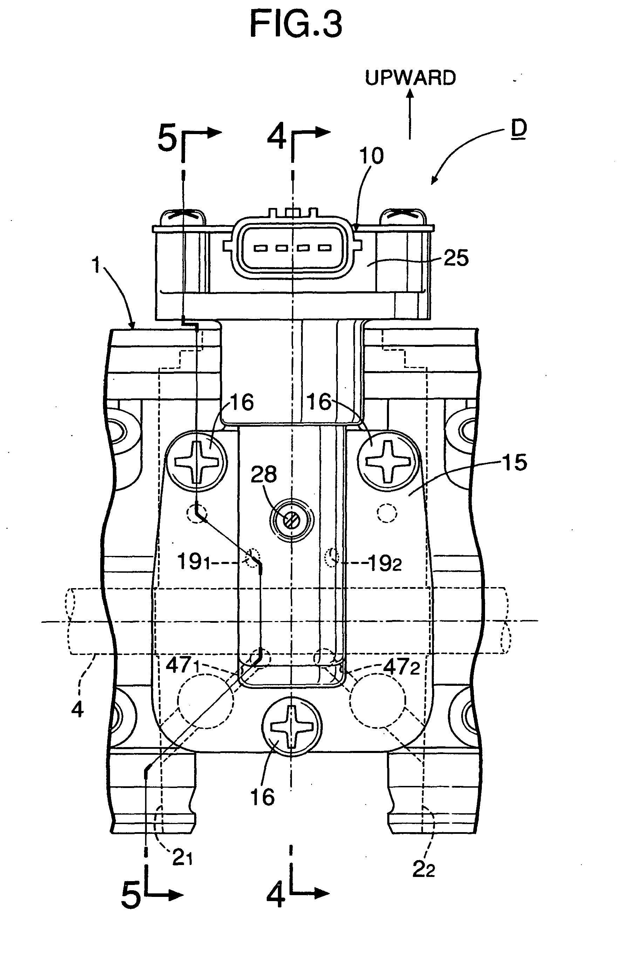

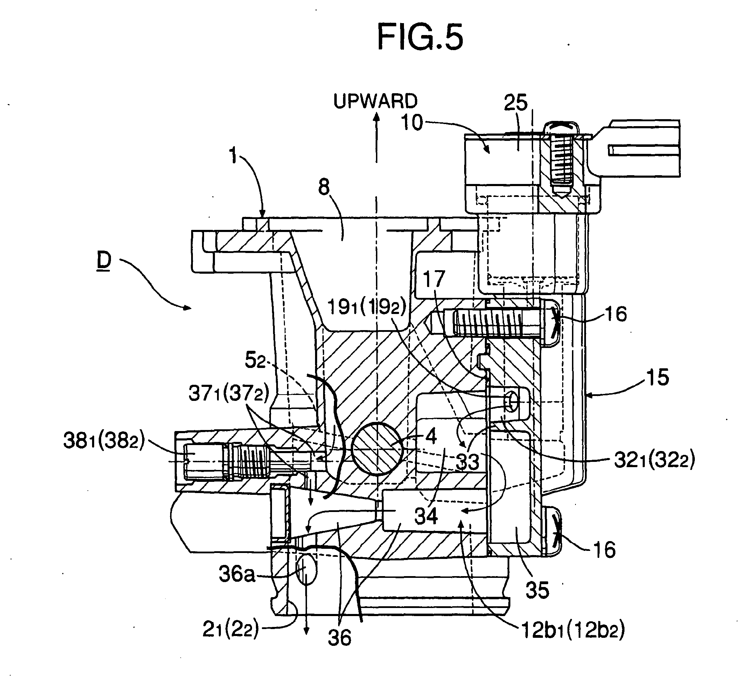

The specific structure of the bypasses 12₁ and 12₂ of the throttle body 1 and the bypass control valve 10 is now explained by reference to FIG. 3 to FIG. 9.

A control block 15 is detachably joined by a plurality of bolts 16 to one side face of the throttle body 1 with a gasket 17 interposed therebetween, a cylindrical valve chamber 18 extending vertically is provided in the control block 15, and the guide passage 9, which provides communication between a lower part of the air inlet chamber 8 and a lower part of the valve chamber 18, is provided from the throttle body 1 to the control block 15. By so doing, the bypass upstream passage 12a is disposed beneath a valve body 26.

A pair of distribution chambers 32₁ and 32₂ are provided around the lower part of the valve chamber 18, and a pair of metering holes 19₁ and 19₂ providing communication between the valve chamber 18 and the distribution chambers 32₁ and 32₂ are formed in a peripheral wall of the valve chamber 18.

The valve body 26, which is piston-shaped, is slidably fitted into the valve chamber 18 from the top, the valve body 26 adjusting the degree of opening of the metering holes 19₁ and 19₂ from fully closed to fully open states, and in this arrangement, in order to prevent the valve body 26 from rotating, a keyway 27 is provided in a side face of the valve body 26, and a key 28 for slidably engaging with the keyway 27 is mounted on the control block 15. An electric actuator 25 for opening and closing the valve body 26 is fitted into a mounting hole 29 formed in the control block 15 so as to communicate with the upper end of the valve chamber 18, and is secured to the control block 15 by a bolt. This electric actuator 25 has a downwardly projecting output shaft 30 screwed into a threaded hole 31 in a central part of the valve body 26, and the valve body 26 can be raised or lowered (opened or closed) by rotating the output shaft 30 normally or reversely. A plate-shaped seal 23 in intimate contact with the outer periphery of the output shaft 30 is disposed between a lower end face of the electric actuator 25 and a bottom face of the mounting hole 29. The bypass control valve 10 is thus formed from the valve chamber 18 and the valve body 26.

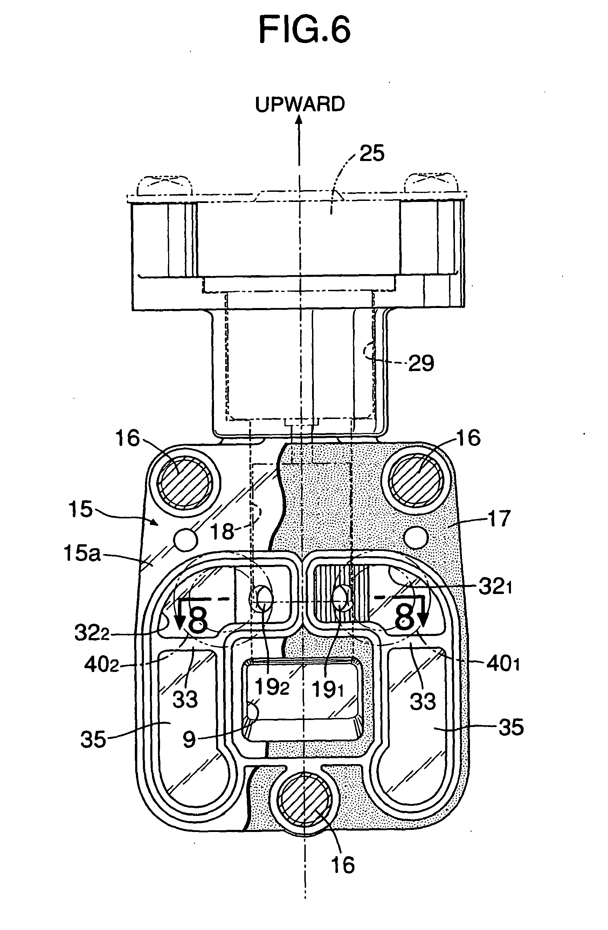

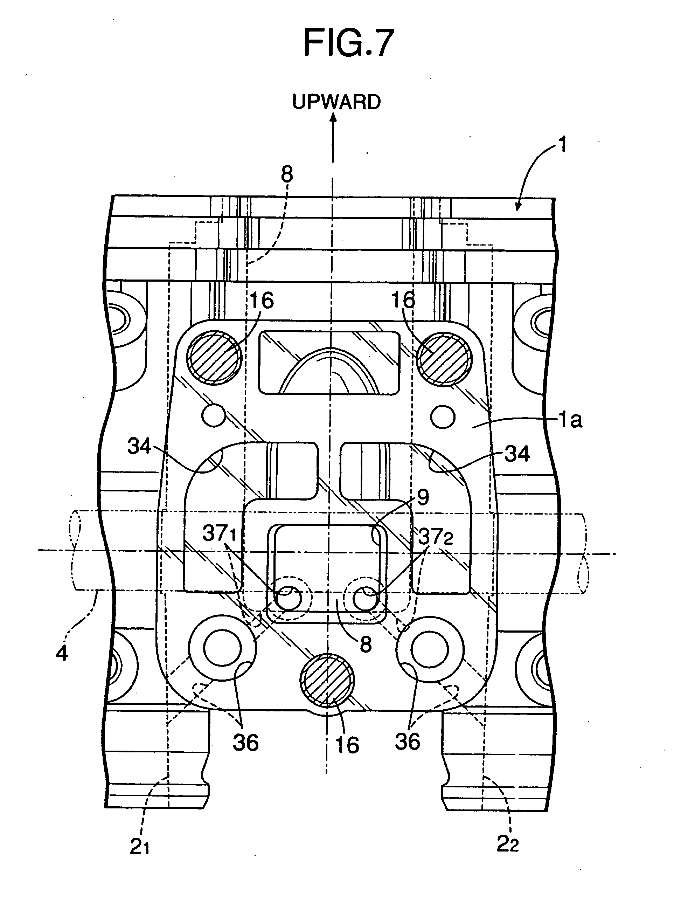

Formed in a face 15a (see FIG. 6) of the control block 15, via which it is joined to the throttle body 1, so as to open thereon are the pair of distribution chambers 32₁ and 32₂ and a pair of second labyrinth elements 35 and 35 arranged beneath the distribution chambers 32₁ and 32₂ with partitions 33 interposed therebetween. Formed in a face 1a (see FIG. 7) of the throttle body 1, via which it is joined to the control block 15, so as to open thereon are a pair of first labyrinth elements 34 and 34 and a pair of through holes 36 and 36 positioned therebeneath. When the control block 15 is joined to the throttle body 1, the first labyrinth elements 34 and 34 provide communication between the distribution chambers 32₁ and 32₂ and the second labyrinth elements 35 and 35, and the second labyrinth elements 35 and 35 communicate with the through holes 36 and 36. The through holes 36 and 36 are formed by connecting a plurality of drill holes, and their ends open into the intake paths 2₁ and 2₂ downstream of the throttle valves 5₁ and 5₂.

The metering holes 19₁ and 19₂, the distribution chambers 32₁ and 32₂, the first labyrinth elements 34 and 34, the second labyrinth elements 35 and 35, and the through holes 36 and 36 thus form the labyrinth-like bypass downstream passages 12b₁ and 12b₂ of the pair of bypasses 12₁ and 12₂.

The lower part of the air inlet chamber 8 and middle sections of the through holes 36 and 36 communicate via idle air passage 37₁ and 37₂, and a pair of idle adjustment screws 38₁ and 38₂ are screwed into the throttle body 1, the idle adjustment screws 38₁ and 38₂ being capable of adjusting the passage area of the middle sections of the idle air passages 37₁ and 37₂ respectively (see FIG. 9).

As is clearly shown in FIG. 8, the metering holes 19₁ and 19₂, which are at the upstream ends of the pair of bypass downstream passages 12b₁ and 12b₂ and open into the cylindrical valve chamber 18 are disposed to one side of a plane P1 containing an axis Y of the valve chamber 18. The key 28 for preventing rotation of the valve body 26 is disposed on a second plane P2 containing the axis Y and running through the midpoint between the two metering holes 19₁ and 19₂.

The operation of this embodiment is now explained.

Since during warming up of the engine a control system (not illustrated) supplies to the electric actuator 25 of the bypass control valve 10 a current corresponding to the engine temperature so as to operate the electric actuator 25, when the engine temperature is low, the valve body 26 is pulled up by a large amount so as to adjust the degree of opening of the metering holes 19₁ and 19₂ to a large value. In a state in which the throttle valves 5₁ and 5₂ are fully closed, the amount of fast idle air supplied to the engine through the bypasses 12₁ and 12₂ is controlled so as to be relatively large by the metering holes 19₁ and 19₂, at the same time fuel is injected from the fuel injection valves 7₁,7₂ toward the downstream side of the intake paths 2₁ and 2₂ so as to correspond to the amount of operation of the electric actuator 25, and the engine receives a supply of the fast idle air and the fuel, thus maintaining an appropriate fast idling rotational speed so as to accelerate the warming up.

Since, when the engine temperature increases as the warming up progresses, the electric actuator 25 lowers the valve body 26 accordingly so as to decrease the degree of opening of the metering holes 19₁ and 19₂, the fast idle air supplied to the engine via the bypasses 12₁ and 12₂ is reduced, and the engine fast idling rotational speed decreases. Since, when the engine temperature reaches a predetermined high temperature, the electric actuator 25 lowers the valve body 26 to a fully closed state so as to fully block the bypasses 12₁ and 12₂, in a state in which the throttle valves 5₁ and 5₂ of the intake paths 2₁ and 2₂ are closed, a minimum idle air is supplied to the engine only via the idle air passages 37₁ and 37₂, and the engine is controlled at a normal idle rotational speed. In this arrangement, the amounts of idle air flowing through the idle air passages 37₁ and 37₂ can be individually adjusted by adjusting the idle adjustment screws 38₁ and 38₂ forward and backward.

Since, during fast idling when the valve body 26 of the bypass control valve 10 adjusts the degree of opening of the metering holes 19₁ and 19₂, the engine intake negative pressure acts alternately on the side face of the valve body 26 via the pair of bypass downstream passages 12b₁ and 12b₂, that is, the metering holes 19₁ and 19₂, the valve body 26 is alternately drawn toward the metering holes 19₁ and 19₂ side within the cylindrical valve chamber 18, but since these metering holes 19₁ and 19₂ are disposed to one side of the plane P1 containing the axis Y of the valve chamber 18, the valve body 26 is drawn by the above negative pressure toward a middle section of the inner face of the valve chamber 18 between the metering holes 19₁ and 19₂, thus suppressing vibration. As a result, there is hardly any change in the gap between the valve body 26 and the inner face of the valve chamber 18 on the metering holes 19₁ and 19₂ side, the precision of control of the degree of opening of the metering holes 19₁ and 19₂ by the valve body 26 is enhanced, the amount of fast idle air supplied to each engine cylinder is made uniform, and it is possible to stabilize the fast idle rotational speed and reduce harmful components in the exhaust gas.

On the other hand, since the key 28 and the keyway 27 for preventing the valve body 26 from rotating are disposed on the second plane P2 containing the axis Y and running through the midpoint between the two metering holes 19₁ and 19₂, even when the valve body 26 is drawn by the negative pressure toward the middle section of the inner face of the valve chamber 18 between the metering holes 19₁ and 19₂, an undue side pressure does not act between the key 28 and the keyway 27, and the key 28 and the keyway 27 therefore do not interfere with sliding of the valve body 26, thereby ensuring that the valve body 26 can be smoothly moved by the actuator 25.

Furthermore, since the actuator 25 is disposed above the bypass control valve 10, even when water droplets are generated in the bypasses 12₁ and 12₂ or fuel enters the bypasses 12₁ and 12₂ due to the engine blow-back phenomenon, it is possible to easily prevent these water droplets and fuel from flowing into the electric actuator 25, the electric actuator 25 therefore does not require expensive sealing means, and the employment of simple and inexpensive sealing means is sufficient.

Moreover, since the bypass upstream passage 12a upstream of the valve body 26, that is, the air inlet chamber 8 and the guide passage 9, are disposed beneath the valve body 26, and the idle air passages 37₁ and 37₂ extend from the lower part of the air inlet chamber 8 to reach the intake paths 2₁ and 2₂ of the throttle body 1, water droplets and fuel that have been generated in the bypasses 12₁ and 12₂ or have entered the bypasses 12₁ and 12₂ flow down the bypass upstream passage 12a; moreover, in this bypass upstream passage 12a, the flow of air from the idle air passages 37₁ and 37₂ toward the downstream side of the intake paths 2₁ and 2₂ is always generated regardless of whether the valve body 26 is open or closed, the water droplets or fuel can be discharged into the intake paths 2₁ and 2₂ with the flow of air, and it is therefore possible to prevent fuel or water droplets from building up in the bypasses 12₁ and 12₂, thereby ensuring that the amount of fast idle air is appropriately adjusted by the bypass control valve 10.

Furthermore, since the bypass downstream passages 12b₁ and 12b₂ are formed as a labyrinth from the first labyrinth elements 34 and 34 and the second labyrinth elements 35 and 35, it is possible to alleviate blow-back of gas from the intake paths 2₁ and 2₂ and prevent fuel, etc. from entering the bypass control valve 10.

Moreover, since the throttle body 1 and the control block 15, on which the bypass control valve 10 is mounted, are formed as separate bodies so that they can be joined and separated, the plurality of bypasses 12₁ and 12₂ also have a divided form, and it becomes easy to form these bypasses 12₁ and 12₂. Moreover, since an assembly of the control block 15 and the bypass control valve 10 can be assembled separately from the throttle body 1, the ease of assembly is good, and since the control block 15 can be separated from the throttle body 1, the ease of maintenance of the bypass control valve 10, etc. is good.

An embodiment of the present invention is explained above, but the present invention is not limited thereby and may be modified in a variety of ways as long as the modifications do not depart from the scope thereof as defined in the appended claims. For example, the present invention may be applied to a horizontal throttle body in which the intake path is substantially horizontal, and in this case it is desirable that the vertical relationship between the electric actuator 25, the valve body 26, and the bypass upstream passage 12a of the above-mentioned embodiment is maintained.

## Claims

1. A multicylinder engine intake system comprising a plurality of intake paths (2₁, 2₂) communicating with intake ports of a multicylinder engine, a plurality of throttle valves (5₁, 5₂) for opening and closing these intake paths (2₁, 2₂), a common bypass upstream passage (12a) having an upstream end thereof opening to the atmosphere, a plurality of bypass downstream passages (12b₁, 12b₂) having downstream ends thereof opening into the intake paths (2₁, 2₂) downstream of the corresponding throttle valves (5₁, 5₂), and a bypass control valve (10) providing communication between a downstream end of the bypass upstream passage (12a) and upstream ends of the plurality of bypass downstream passages (12b₁, 12b₂) and controlling the degree of communication,
wherein the bypass control valve (10) is formed from a cylindrical valve chamber (18) and a piston-shaped valve body (26) slidably fitted into the valve chamber (18), the downstream end of the bypass upstream passage (12a) opens on one end face of the valve chamber (18), the upstream ends of the plurality of bypass downstream passages (12b₁, 12b₂) open on a side face of the valve chamber (18) to one side of a plane (P1) containing an axis (Y) of the valve chamber (18), and the degree of communication between the bypass upstream passage (12a) and the bypass downstream passages (12b₁, 12b₂) is controlled by opening and closing the upstream ends of the bypass downstream passages (12b₁, 12b₂) by means of sliding of the valve body (26),
**characterized by** an electric actuator (25) for opening and closing the valve body (26) by rotating an output shaft (30) normally or reversely, the output shaft (30) being screwed into a threaded hole (31) in a central part of the valve body (26),
a control block (15) in which the valve chamber (18) is formed is joined to one side face of a throttle body (1), the bypass upstream passage (12a) and the bypass downstream passages (12b₁, 12b₂) are opened to a face (15a) of the control block (15), via which the control block (15) is joined to the throttle body (1), and
a rotation-preventing means (27, 28) for preventing the valve body (26) from rotating;
wherein the rotation-preventing means comprises a key (28) and a keyway (27) disposed on a second plane (P2) containing the axis (Y) of the valve chamber (18), running through the midpoint between the openings of the plurality of bypass downstream passages (12b₁, 12b₂) into the valve chamber (18) and being orthogonal to the face (15a) of the control block (15), via which the control block (15) is joined to the throttle body (1).

## Patentansprüche

1. Mehrzylinder-Motor-Ansaugsystem, umfassend
eine Mehrzahl von Ansaugpfaden (2₁, 2₂), die mit Ansaug-Anschlüssen eines Mehrzylinder-Motors in Verbindung stehen,
eine Mehrzahl von Drosselklappen-Ventilen (5₁, 5₂) zum Öffnen und Schließen dieser Ansaugpfade (2₁, 2₂), einen gemeinsamen stromaufwärtigen Umleitungs-Durchgang (12a), welcher ein stromaufwärtiges Ende davon aufweist, das zur Atmosphäre hin geöffnet ist, eine Mehrzahl von stromabwärtigen Umleitungs-Durchgängen (12b₁, 12b₂), die stromabwärtige Enden davon aufweisen, die sich zu den Ansaugpfaden (2₁, 2₂) hin stromabwärts von den entsprechenden Drosselklappen-Ventilen (5₁, 5₂) öffnen,
und ein Umleitungs-Steuerungs-/Regelungsventil (10), welches eine Verbindung zwischen einem stromabwärtigen Ende des stromaufwärtigen Umleitungs-Durchgangs (12a) und stromaufwärtigen Enden der Mehrzahl von stromabwärtigen Umleitungs-Durchgängen (12b₁, 12b₂) aufweist, und welches den Grad an Verbindung steuert/regelt,
wobei das Umleitungs-Steuerungs-/Regelungsventil (10) aus einer zylindrischen Ventilkammer (18) und einem kolbenartig geformten Ventilkörper (26) gebildet ist, welcher verschiebbar in die Ventilkammer (18) eingepasst ist,
wobei das stromabwärtige Ende des stromaufwärtigen Umleitungs-Durchgangs (12a) sich an einer Endwand der Ventilkammer (18) öffnet, wobei die stromaufwärtigen Enden der Mehrzahl von stromabwärtigen Umleitungs-Duchgängen (12b₁, 12b₂) sich auf einer Seitenwand der Ventilkammer (18) zu einer Seite einer Ebene (P1) öffnen, die eine Achse (Y) der Ventilkammer (18) enthält, und
wobei der Grad der Verbindung zwischen dem stromaufwärtigen Umleitungs-Durchgang (12a) und den stromabwärtigen Umleitungs-Durchgängen (12b₁, 12b₂) durch Öffnen und Schließen der stromaufwärtigen Enden der stromabwärtigen Umleitungs-Durchgänge (12b₁, 12b₂) mittels Verschieben des Ventilkörpers (26) gesteuert/geregelt wird,
**gekennzeichnet durch** einen elektrischen Aktuator (25) zum Öffnen und Schließen des Ventilkörpers (26) **durch** Drehen einer Ausgangswelle (30) in normale oder umgekehrte Richtung,
wobei die Ausgangswelle (30) in eine Gewindebohrung (31) in einem zentralen Teil des Ventilkörpers (26) geschraubt ist,
wobei ein Steuerungs-/Regelungsblock (15), in welchem die Ventilkammer (18) gebildet ist, mit einer Seitenwand eines Drosselklappen-Körpers (1) verbunden ist,
wobei der stromaufwärtige Umleitungs-Durchgang (12a) und die stromabwärtigen Umleitungs-Durchgänge (12b₁,12b₂) zu einer Wand (15a) des Steuerungs-/Regelungsblocks (15) geöffnet sind, über welche der Steuerungs-/Regelungsblock (15) mit dem Drosselklappen-Körper (1) verbunden ist, und
Drehungs-Verhinderungsmittel (27, 28) zum Verhindern des Drehens des Ventilkörpers (26),
wobei die Drehungs-Verhinderungsmittel einen Schlüssel (28) und eine Schlüsselnut (27) umfassen, die auf einer zweiten Ebene (P2) angeordnet sind, welche die Achse (Y) der Ventilkammer (18) enthält, **durch** den Mittelpunkt zwischen den Öffnungen der Mehrzahl von stromabwärtigen Umleitungs-Durchgängen (12b₁, 12b₂), in die Ventilkammer (18) verlaufen und senkrecht zu der Wand (15a) des Steuerungs-/Regelungsblocks (15) sind, über welche der Steuerungs-/Regelungsblock (15) mit dem Drosselklappen-Körper (1) verbunden ist.

## Revendications

1. Système d'admission de moteur à plusieurs cylindres comprenant une pluralité de trajectoires d'admission (2₁, 2₂) communiquant avec des orifices d'admission d'un moteur à plusieurs cylindres, une pluralité de papillons des gaz (5₁, 5₂) pour ouvrir et fermer ces trajectoires d'admission (2₁, 2₂), un passage de dérivation commun en amont (12a) ayant son extrémité en amont s'ouvrant sur l'atmosphère, une pluralité de passages de dérivation en aval (12b₁, 12b₂) ayant leurs extrémités en aval qui débouchent dans les trajectoires d'admission (2₁, 2₂) en aval des papillons des gaz (5₁, 5₂) correspondants et une soupape de commande de dérivation (10) fournissant la communication entre une extrémité en aval du passage de dérivation en amont (12a) et les extrémités en amont de la pluralité de passages de dérivation en aval (12b₁, 12b₂) et contrôlant le degré de communication,
dans lequel la soupape de commande de dérivation (10) est formée à partir d'une chambre de soupape cylindrique (18) et d'un corps de soupape en forme de piston (26) monté de manière coulissante dans la chambre de soupape (18), l'extrémité en aval du passage de dérivation en amont (12a) s'ouvre sur une face d'extrémité de la chambre de soupape (18), les extrémités en amont de la pluralité de passages de dérivation en aval (12b₁, 12b₂) s'ouvrent sur une face latérale de la chambre de soupape (18) jusqu'à un côté d'un plan (P1) contenant un axe (Y) de la chambre de soupape (18), et le degré de communication entre le passage de dérivation en amont (12a) et les passages de dérivation en aval (12b₁, 12b₂) est contrôlé en ouvrant et en fermant les extrémités en amont des passages de dérivation en aval (12b₁, 12b₂) au moyen du coulissement du corps de soupape (26),
**caractérisé par** un actionneur électrique (25) pour ouvrir et fermer le corps de soupape (26) en faisant tourner un arbre de sortie (30) normalement ou en sens inverse, l'arbre de sortie (30) étant vissé dans un trou fileté (31) dans une partie centrale du corps de soupape (26),
un bloc de commande (15) dans lequel la chambre de soupape (18) est formée, est assemblé à une face latérale d'un corps d'étranglement (1), le passage de dérivation en amont (12a) et les passages de dérivation en aval (12b₁, 12b₂) sont ouverts sur une face (15a) du bloc de commande (15), grâce auxquels le bloc de commande (15) est assemblé au corps d'étranglement (1), et
des moyens anti-rotation (27, 28) pour empêcher la rotation du corps de soupape (26) ;
dans lequel les moyens anti-rotation comprennent une clavette (28) et un chemin de clavette (27) disposé sur un deuxième plan (P2) contenant l'axe (Y) de la chambre de soupape (18) s'étendant à travers le point central situé entre les ouvertures de la pluralité de passages de dérivation en aval (12b₁, 12b₂) dans la chambre de soupape (18) et étant orthogonaux par rapport à la face (15a) du bloc de commande (15), grâce auxquels le bloc de commande (15) est assemblé au corps d'étranglement (1).
